# EUROPEAN PATENT SPECIFICATION

(11) **EP 4 109 029 B1**
(45) Date of publication and mention of the grant of the patent: **28.01.2026**
(21) Application number: 22180727.4
(22) Date of filing: 23.06.2022
(51) Int. Cl.: F28F 27/02, F28D 9/00

(54) **HEAT EXCHANGER**
WÄRMETAUSCHER
ÉCHANGEUR DE CHALEUR

(30) Priority: 24.06.2021 KR 20210082360
(43) Date of publication of application: 28.12.2022
(73) Proprietor: Korea Atomic Energy Research Institute, Daejeon 34057 (KR)
(72) Inventor: CHO, Hyunjun, 34057 Daejeon (KR); KEE, June Woo, 34057 Daejeon (KR); KIM, Seok, 34057 Daejeon (KR); KIM, Young In, 34057 Daejeon (KR); MOON, Joo Hyung, 34057 Daejeon (KR); PARK, Yunbum, 34057 Daejeon (KR); SHIN, Soo Jai, 34057 Daejeon (KR); RYU, Seungyeob, 34057 Daejeon (KR); LEE, Minkyu, 34057 Daejeon (KR); CHANG, Cheongbong, 34057 Daejeon (KR); HAN, Hun Sik, 34057 Daejeon (KR); HONG, Sung Deok, 34057 Daejeon (KR)
(74) Representative: BCKIP Part mbB

(56) References cited:
- EP-A1- 3 551 953
- EP-A2- 1 611 320
- EP-B1- 1 611 320
- DE-A1- 102006 033 313
- US-A1- 2014 116 648
- US-A1- 2015 184 954
- US-A1- 2015 316 331
- US-A1- 2017 167 810

## Description

### TECHNICAL FIELD

The present disclosure relates to a heat exchanger.

The present disclosure relates to the development of innovative SMART system technologies of the SMART innovative technology development project (R&D) with support from the National Research Foundation of Korea, which was funded by the Ministry of Science and ICT. The Project Serial Number of the national R&D project supporting the present disclosure is 1711129153, the Project number is 2020M2D7A1079178, the contribution rate is 1/1, the project performing organization is Korea Atomic Energy Research Institute (KAERI), and the research was performed from January 1, 2021 to December 31, 2021.

### BACKGROUND

In general, power output of large commercial nuclear power plants is constantly maintained at 100%, and since the fuel costs of nuclear power plants are cheaper than other major power sources such as thermal power, it is economical to maintain 100% power output compared to other power sources. However, small and medium-sized nuclear reactors, which have recently been newly developed in the market, can be supplied to regions with low population density or islands, and in this case, because of a large fluctuation in demand, it may be difficult for the reactors to handle a base load while always operating at 100%.

In addition, even in developed countries with a high population density, as the ratio of new and renewable energy increases, the number of regions with a smart grid system which sells electricity at a price that fluctuates in seconds in the electricity trading market is increasing. In this case, when electricity supply exceeds electricity demand, the unit price of electricity may be very low. Accordingly, nuclear reactors having the ability to freely control the power output are recently being studied in order to improve the economic feasibility of nuclear power plants, which is one of the important business decision criteria of business operators considering the construction of nuclear power plants.

Meanwhile, a heat exchanger is required for a nuclear reactor to use heat generated in the core. Such a heat exchanger may be a printed circuit heat exchanger (PCHE). The printed circuit heat exchanger is a heat exchanger manufactured by creating flow paths in metal plates through chemical etching and then performing diffusion bonding among the metal plates. A heat exchanger formed by diffusion bonding and stacking rectangular flat plates generally has a rectangular parallelepiped block shape.

However, the optimal flow path length (which is relevant to the length of the rectangular parallelepiped) of a conventional printed-circuit type steam generator is designed to meet operating conditions for 100% power output. Accordingly, when a nuclear reactor is operated under a low-power condition, there may be a pressure loss due to an unnecessarily long flow path length.

### (Related Art)

### (Patent Document) Korean Patent Application Publication No. 10-2020-0049300 (published on May 8, 2020)

EP 1611 320 A2 discloses a heat exchanger according to the preamble of claim 1 and describes a cooling module, comprising a heat exchanger with a body, defining first flow channels, for a fluid to be cooled, alternating with second channels, for a cooling fluid and a by-pass channel which makes a direct connection between an inlet and an outlet for the fluid to be cooled.

EP 3 551 953 A1 discloses a heat exchanger for an air intake thermal management device for a combustion engine. The heat exchanger comprises a heat exchange bundle, in particular comprising plates or tubes, comprising circulation channels for a heat transfer fluid, an inlet and an outlet for a heat transfer fluid, in particular water, connected to said channels of the bundle, an intermediate outlet arranged to allow a heat transfer fluid to circulate in just one part of the channels of the bundle, between the inlet and this intermediate outlet.

US 2014/116648 A1 discloses a heat exchanger for a vehicle including a heat radiating portion provided with first and second connecting lines formed by alternately stacking a plurality of plates and first and second operating fluids heat-exchanging with each other while passing through the first and second connecting lines; a bifurcating portion connecting an inflow hole for flowing one of the operating fluids with an exhaust hole for exhausting the one operating fluid, and adapted for the one operating fluid to bypass the heat radiating portion according to a temperature of the one operating fluid; and a valve unit mounted at the inflow hole forming the bifurcating portion and adapted to flow the operating fluid selectively to the heat radiating portion or the bifurcating portion according to a temperature of the one operating fluid flowing into the inflow hole.

DE 10 2006 033 313 A1 discloses a heat exchanger having flow channels flowed through by a fluid, and a housing accommodating the flow channels, where the flow channels are designed as disk pairs. The housing is flowed through by another fluid, which is different from the former fluid. The flow channels have a flat cross-section and longitudinal sides. The disk pairs comprise upper and lower disks that are connected with one another by a rebated joint. The longitudinal sides are connected with the housing in firmly bonded manner through soldering or welding.

US 2017/167810 A1 a system for dynamic control of the operation of a heat exchanger, the system comprising a heat exchanger, a plurality of injector arrangements, a local sensor arrangement, and a controller, wherein the local sensor arrangement comprises a plurality of local temperature sensors being arranged to measure temperature values; and wherein the controller is arranged to determine a difference between the measured temperature values and is further arranged to communicate with the valves of the plurality of injector arrangements to adjust the local amount of first fluid supplied by at least one of the injector arrangements in order to even out the determined difference. The application also relates to a method for the dynamic control of the operation of a heat exchanger in such a system.

### SUMMARY

In view of the above, the present disclosure provides a heat exchanger capable of reducing a pressure loss according to reactor operating conditions, especially, a printed circuit heat exchanger, and a nuclear power plant including the same.

In accordance with an aspect of the present disclosure, there is provided a heat exchanger according to claim 1.

According to an embodiment of the present disclosure, it is possible to adjust characteristics of the heat exchanger by using only a desired portion of a flow path formed in a plate through a flow path adjuster.

In addition, when necessary, for example, in low-power operation, flow instability may be suppressed by increasing a pressure loss coefficient of an inlet-side orifice through the flow path adjuster, and in the event of a nuclear incident, when residual heat removal such as a passive residual heat removal system is in progress, it is possible to increase the amount of heat removal by lowering a pressure loss of a flow path module through the flow path adjuster.

### BRIEF DESCRIPTION OF THE DRAWINGS

FIG. 1 is a view showing a printed circuit heat exchanger (PCHE) of a nuclear power plant according to an embodiment of the present disclosure.
FIGS. 2 to 5 are views showing a flow path module formed in a plate according to the embodiment of the present disclosure.
FIG. 6 is a view showing that an orifice formed in a flow path adjuster communicates with a connection flow path according to the embodiment of the present disclosure.
FIG. 7 is a view showing that an adjustment flow path instead of the orifice depicted in FIG. 6 is formed in the flow path adjuster to communicate with the connection flow path according to the embodiment of the present disclosure.
FIG. 8 is a view showing the flow path adjuster according to the embodiment of the present disclosure.
FIGS. 9A and 9B are views illustrating a state when the flow path adjuster is rotated about a second direction according to the embodiment of the present disclosure.
FIGS. 10A to 10C are views showing a state when the flow path adjuster is moved in a first direction according to the embodiment of the present disclosure.
FIGS. 11A and 11B are views showing a state when the flow path adjuster is moved in the second direction according to the embodiment of the present disclosure.
FIGS. 12A to 12C are view showing a plurality of adjustment flow paths when the flow path adjuster is moved in the first direction according to the embodiment of the present disclosure.
FIGS. 13A to 13C are views showing a plurality of adjustment flow paths when the flow path adjuster is moved in the second direction according to the embodiment of the present disclosure.
FIGS. 14A to 14C are views showing a plurality of adjustment flow paths when the flow path adjuster is rotated about the second direction according to the embodiment of the present disclosure.
FIGS. 15A to 15F are views showing an inflow path and a plurality of connecting passages when the flow path adjuster is rotated about the second direction according to the embodiment of the present disclosure.
FIGS. 16A to 16D and FIGS. 17A to 17H are views showing an inflow path and a plurality of connecting passages when the flow path adjuster is moved in the first direction according to the embodiment of the present disclosure.
FIGS. 18A to 18D are views showing an inflow path and a plurality of connecting passages when the flow path adjuster is moved in the second direction according to the embodiment of the present disclosure.
FIGS. 19 to 22 are views showing a state in which the connecting member according to the embodiment of the present disclosure is connected to a plurality of flow path adjusters.

### DETAILED DESCRIPTION

Hereinafter, specific embodiments for implementing the present disclosure will be described in detail with reference to the drawings.

In describing the present disclosure, detailed descriptions of known configurations or functions may be omitted to clarify the present disclosure.

When an element is referred to as being 'connected' to, 'supported' by, 'transferred' to, or 'contacted' with another element, it should be understood that the element may be directly connected to, supported by, transferred to, or contacted with another element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper side and the lower side, are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

Hereinafter, a nuclear power plant 1 according to an embodiment of the present disclosure will be described with reference to the drawings.

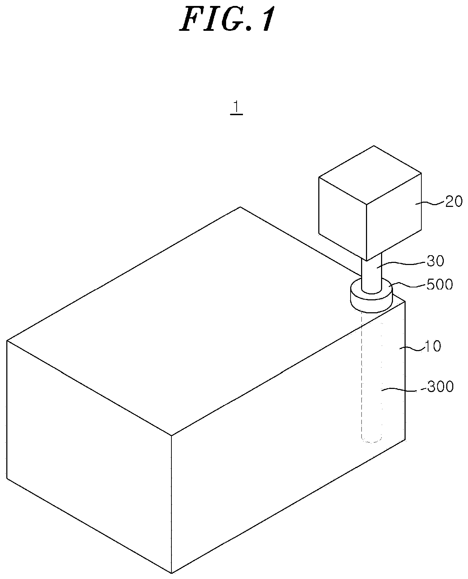

Referring to FIG. 1, the nuclear power plant 1 is a facility for causing nuclear fission through a nuclear reactor, and may generate power through steam generated by the nuclear fission. The nuclear power plant 1 may include a printed circuit heat exchanger (PCHE) 10, an actuator 20, and a connection member 30.

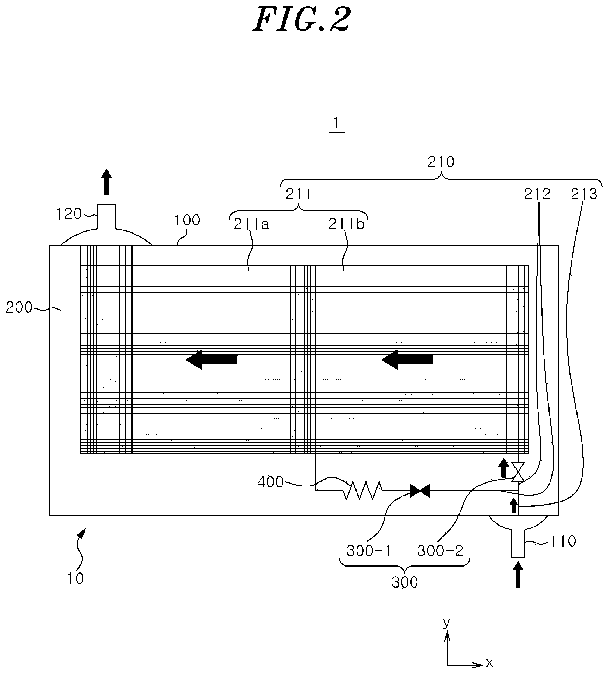

Referring to FIGS. 2 to 7, the heat exchanger 10 is a device in which a heat exchangeable high-temperature fluid and a heat exchangeable low-temperature fluid can flow. The heat exchanger 10 may be a printed circuit heat exchanger (PCHE). A high-temperature fluid and a low-temperature fluid may be introduced into the printed circuit heat exchanger (PCHE) 10 to exchange heat with each other. Hereinafter, the high-temperature fluid introduced into the printed circuit heat exchanger 10 is referred to as a first fluid, and the low-temperature fluid introduced into the printed circuit heat exchanger 10 is referred to as a second fluid. In addition, the first fluid may be a reactor coolant of relatively high temperature, and the second fluid may be water of relatively low temperature. In addition, the first fluid is heat-exchanged with the second fluid to have a low temperature and is then discharged from the printed circuit heat exchanger 10, and the second fluid is heat-exchanged with the first fluid to have a high temperature and is then discharged from the heat exchanger 10. In addition, the heat exchanger 10 may be a steam generator. Due to the steam generator, the second fluid may boil, in a second flow path module which will be described later, by heat received from the first fluid to be converted into steam.

In addition, the printed circuit heat exchanger 10 may be provided in plural. The printed circuit heat exchangers 10 may be spaced apart from each other or may be stacked. For example, the plurality of printed circuit heat exchangers 10 may be arranged along a second direction which will be described later. The printed circuit heat exchanger 10 may include a body 100, a plate 200, a flow path adjuster 300, and an orifice 400.

The body 100 may include a housing forming an overall appearance of the printed circuit heat exchanger 10 and a frame supporting other components. The body 100 may accommodate a plurality of plates 200. In addition, an inlet header 110 and an outlet header 120 may be formed in the body 100.

The inlet header 110 may provide a plurality of flow paths for a fluid to be introduced into the printed circuit heat exchanger 10. In other words, the fluid may be introduced into the printed circuit heat exchanger 10 through the inlet header 110. In addition, the inlet header 110 may be formed in plural. A plurality of inlet headers 110 may include a first inlet header into which the first fluid flows and a second inlet header into which the second fluid flows.

The outlet header 120 may discharge a fluid flowing inside the printed circuit heat exchanger 10 to the outside of the printed circuit heat exchanger 10. In addition, the outlet header 120 may be formed in plural. A plurality of outlet headers 120 may include a first outlet header through which the first fluid is discharged and a second outlet header through which the second fluid is discharged.

In the plate 200, a flow path module 210 providing a plurality of flow paths for a fluid introduced from the inlet header 110 to flow to the outlet header 120 may be formed. In other words, the flow path module 210 may be connected to the inlet header 110 and the outlet header 120. In addition, a plurality of plates 200 may be formed and stacked on each other. Such a plurality of plates may be assembled by diffusion bonding. The plurality of plates 200 may include a plurality of first plates and a plurality of second plates, and the plurality of first plates and the plurality of second plates may be alternately stacked. The first fluid may flow through flow path modules 210 of the plurality of first plates, and the second fluid may flow through flow path modules 210 of the plurality of second plates. Hereinafter, a flow path module 210 formed in the first plate will be referred to as a first flow path module, and a flow path module 210 formed in the second plate will be referred to as a second flow path module. The flow path modules 210 may include transfer flow path portions 211, connection flow paths 212, inflow paths 213, and adjuster rooms 214.

The transfer flow path portions 211 may communicate with each other and provide a plurality of flow paths for allowing a fluid to flow to the outlet header 120. The transfer flow path portion 211 may be formed in plural. In this case, a fluid may flow to at least one of the plurality of transfer flow path portion 211 by the flow path adjuster 300. For example, a plurality of transfer flow path portions 211 may be arranged along a flow direction of the fluid. The plurality of transfer flow path portions 211 may include a first transfer flow path portion 211a and a second transfer flow path portion 211b.

The first transfer flow path portion 211a may communicate with the outlet header 120, and the second transfer flow path portion 211b may communicate with the first transfer flow path portion 211a. A fluid may flow into at least one of the first transfer flow path portion 211a and the second transfer flow path portion 211b by the flow path adjuster. In other words, the fluid may sequentially pass through the second transfer flow path portion 211b and the first transfer flow path portion 211a by the flow path adjuster 300 to flow to the outlet header 120, or may flow to the outlet header 120 through the second transfer flow path portion 211b without flowing to the first transfer flow path portion 211a.

The connection flow path 212 may be connected to each transfer flow path portion 211 to provide a flow path for transferring a fluid introduced from the inlet header 110 to the plurality of transfer flow path portions 211. For example, the plurality of connection flow paths 212 may be connected to flow paths of the first transfer flow path portion 211a and flow paths of the second transfer flow path portion 211b, respectively. In addition, at least one of the plurality of connection flow paths 212 may be opened and closed by at least one flow path adjuster 300. In other words, a fluid may flow to at least one of the plurality of transfer flow path portion 211 through at least one of the plurality of connection flow paths 212.

An inflow path 213 may provide a flow path through which the fluid introduced from the inlet header 110 flows to at least a portion of the plurality of connection flow paths 212. In other words, the inflow path 213 may be connected to the inlet header 110 and the plurality of connection flow paths 212. Due to the inflow path 213, the fluid introduced from the inlet header 110 may flow into an opened connection flow path 212 among the plurality of connection flow paths 212.

The adjuster room 214 may provide a space in which the flow path adjuster 300 moves. In other words, the flow path adjuster 300 moves inside the adjuster room 214 to open and/or close at least one of the plurality of connection flow paths 212. The adjuster room 214 may be disposed in the plurality of connection flow paths 212 or may be disposed at a portion where the inflow path 213 and the plurality of connection flow paths 212 are joined. In addition, when the adjuster room 214 is disposed at a portion where the inflow path 213 and the plurality of connection flow paths 212 are joined, the fluid flowing in the inflow path 213 may flow through the adjuster room 214 into an opened connection flow path 212 among the plurality of connection flow path 212. In addition, a length of the inner space of the adjuster room 214 in the first direction may be greater than a length of the flow path adjuster 300 in the first direction in a case where the flow path adjuster 300 moves in the first direction. In other words, the adjuster room 214 may provide a space for the flow path adjuster 300 to move in the first direction.

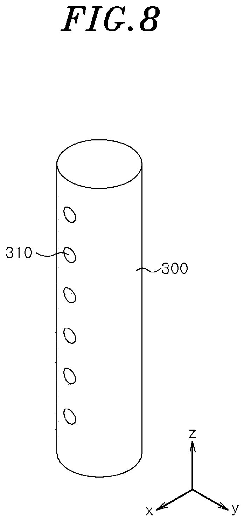

At least a portion of the flow path adjuster 300 may be accommodated in the body 100 and may be moved by the actuator 20 to control the flow of the fluid. In other words, by moving or rotating in one direction, the flow path adjuster 300 may selectively open or close part or all of the flow path provided in the flow path module 210 or may change a direction of the flow path. For example, as shown in FIG. 8, the flow path adjuster 300 may be formed in various ways, such as a cylinder, a rectangular prism, a triangular prism, a polygonal prism, a cone, and any other polygonal pyramid.

At least a part of the flow path adjuster 300 may be accommodated in the adjuster room 214. In addition, the flow path adjuster 300 may pass through the plurality of plates 200 and the body 100 to control the flow of the fluid flowing in a flow path module 210 of each plate 200. For example, the flow path adjuster 300 may pass through the plurality of plates 200 to control at least one of a flow of the first fluid flowing in the first flow module and/or a flow of the second fluid flowing in the second flow module. In addition, the flow path adjuster 300 may be disposed in at least one of the first flow path module and the second flow path module.

A gasket may be provided between the flow path adjuster 300 and the plate 200 in order to prevent a fluid from leaking. The gasket may be formed of metal.

In addition, the flow path adjusters 300 may be provided in plural to control a flow of fluid flowing in the flow path module 210. A plurality of flow path adjusters 300 may be provided in the heat exchanger 10. Also, the plurality of flow path adjusters 300 may be provided in one heat exchanger 10. In addition, in a case where a plurality of heat exchangers 10 is arranged along the second direction, the plurality of flow path adjusters 300 may be arranged in the second direction and formed integrally with each other. In other words, one flow path adjuster 300 may pass through bodies 100 of the plurality of heat exchangers 10 arranged in the second direction.

In addition, in order to control the flow of a fluid, the flow path adjuster 300 may move in a first direction along a surface of the plate 200, rotate about the first direction, move along the second direction crossing the first direction, or rotate about the second direction. The flow path adjuster 300 may be disposed at each of the plurality of connection flow paths 212, or may be disposed at a portion where the plurality of connection flow paths 212 are joined with each other. For example, the second direction crossing the first direction may be a direction perpendicular to the surface of the plate 200 (z direction in the drawing), but the present disclosure is not limited thereto.

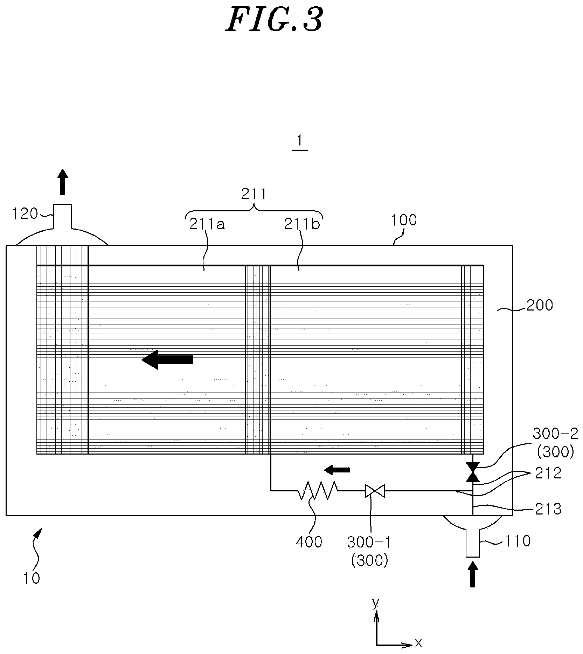

First, with reference to FIGS. 2 and 3, it will be described that a plurality of flow path adjusters 300 is respectively provided and disposed at the plurality of connection flow paths 212.

The plurality of flow path adjusters 300 may be moved along the first direction or the second direction by the actuator 20 or may be rotated about the second direction to open and close the plurality of connection flow paths 212. The plurality of flow path adjusters 300 each may be a gate valve, but the present disclosure is not limited thereto.

For example, as shown in FIGS. 2 and 3, the plurality of flow path adjusters 300 may include a first flow path adjuster 300-1 and a second flow path adjuster 300-2. The first flow path adjuster 300-1 may be moved along the first direction or the second direction or may be rotated about the second direction to open and/or close the first connection flow path which is one of the plurality of connection flow paths 212. The second flow path adjuster 300-2 may be moved along the first direction or the second direction or may be rotated about the second direction to open and close the second connection flow path which is the other one of the plurality of connection flow paths 212. In other words, as shown in FIG. 2, in a case where the first flow path adjuster 300-1 closes the first connection flow path and the second flow path adjuster 300-2 opens the second connection flow path, a fluid may flow to the second transfer flow path portion 211b through the second connection flow path. In addition, as shown in FIG. 3, in a case where the first flow path adjuster 300-1 opens the first connection flow path and the second flow path adjuster 300-2 closes the second connection flow path, a fluid may flow to the first transfer flow path portion 211a through the first connection flow path.

At least one adjustment flow path 310 may be formed in the flow path adjuster 300. The at least one adjustment flow path 310 may be formed through chemical etching or machining. A plurality of adjustment flow paths 310 may be arranged to be spaced apart from each other in the first direction or in the second direction. In addition, the plurality of adjustment flow paths 310 may be disposed to be closer to any one of both side surfaces of the flow path adjuster 300.

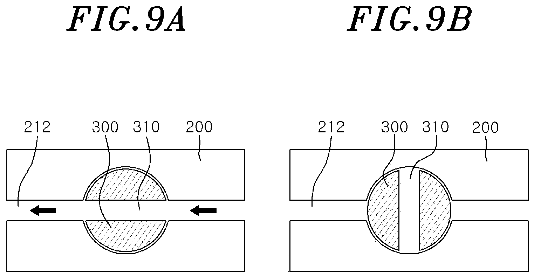

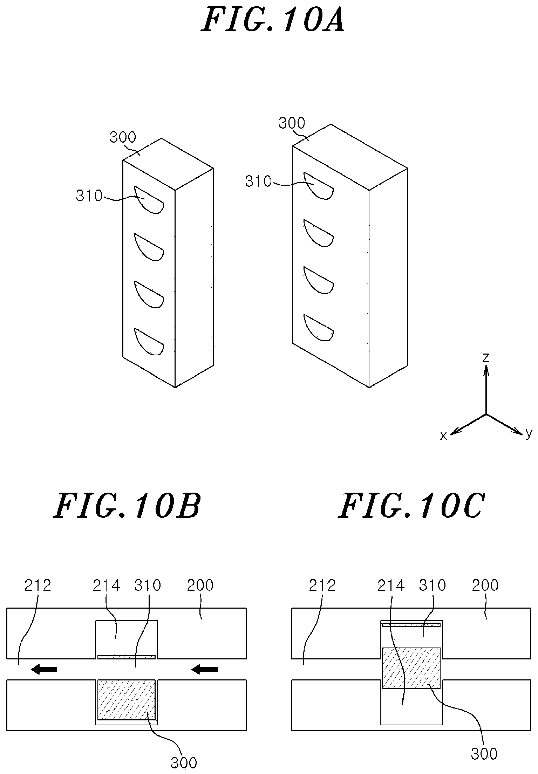

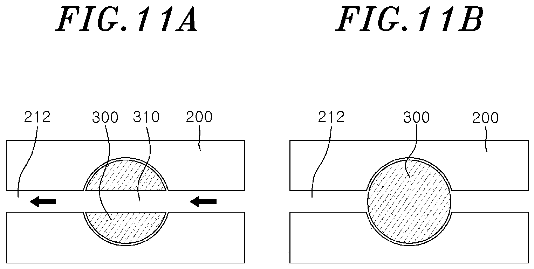

When the adjustment flow path 310 communicates with the connection flow path 212 by movement of the flow path adjuster 300, the connection flow path 212 is opened, and when the adjustment flow path 212 is blocked from the connection flow path 212, the connection flow path 212 may be closed. In other words, a fluid flowing in the connection flow path 212 may be directed to the transfer flow path portion 211 through the adjustment flow path 310. For example, as shown in FIGS. 9A and 9B, the flow path adjuster 300 is rotated about the second direction (the z direction in FIG. 8) by the actuator 20 to selectively open and/or close the connection flow path 212. In another example, as shown in FIGS. 10A to 10C, the flow path adjuster 300 may be moved in the first direction (a direction perpendicular to a direction in which the connection flow path 212 of FIGS. 10B and 10C extends) by the actuator 20 to selectively open and close the connection flow path 212. However, although FIGS. 10A to 10C shows that a moving direction of the flow path adjuster 300 is perpendicular to a direction that the connection flow path 212 extends, the present disclosure does not necessarily limit the moving direction of the flow path adjuster 300 thereto, and the moving direction of the flow path adjuster 300 may be one of directions intersecting the direction in which the connection flow path 212 extends. In another example, as shown in FIGS. 11A and 11B, the flow path adjuster 300 may be moved in the second direction by the actuator 20 to selectively open and/or close the connection flow path 212.

In addition, a plurality of adjustment flow paths may be formed, and the plurality of adjustment flow paths 310 and 320 may be formed with different widths to provide different pressure loss coefficients. In general, the smaller the width is, the greater the pressure loss coefficient is. In other words, the plurality of adjustment flow paths 310 and 320 formed with different widths may change flow resistance of the connection flow path 212 or the inflow path 213. The widths of the plurality of adjustment flow paths 310 and 320 refer to a length in a direction perpendicular to the direction in which the connection flow path 212 extends and a direction perpendicular to the second direction, but the present disclosure is not limited thereto. In other words, the plurality of adjustment flow paths 310 and 320 may be formed in different shapes. For example, the plurality of adjustment flow paths 310 and 320 may have different depths. The depths of the plurality of adjustment flow paths 310 and 320 refer to lengths in the second direction.

In addition, the plurality of adjustment flow paths 310 and 320 include at least one first adjustment flow path 310 and at least one second adjustment flow path 320, and a width of a first adjustment flow path 310 may be formed larger than a width of a second adjustment flow path 320.

The plurality of adjustment flow paths 310 and 320 moved so that one of the plurality of adjustment flow paths 310 and 320 may communicate with the connection flow path 212, the other one of the plurality of adjustment flow paths 310 and 320 may communicate with the connection flow path 212, or the communication between the plurality of adjustment flow paths 310 and 320 and the connection flow path 212 may be blocked. In other words, the first adjustment flow path 310 may communicate with the connection flow path 212, or the second adjustment flow path 320 may communicate with the connection flow path 212.

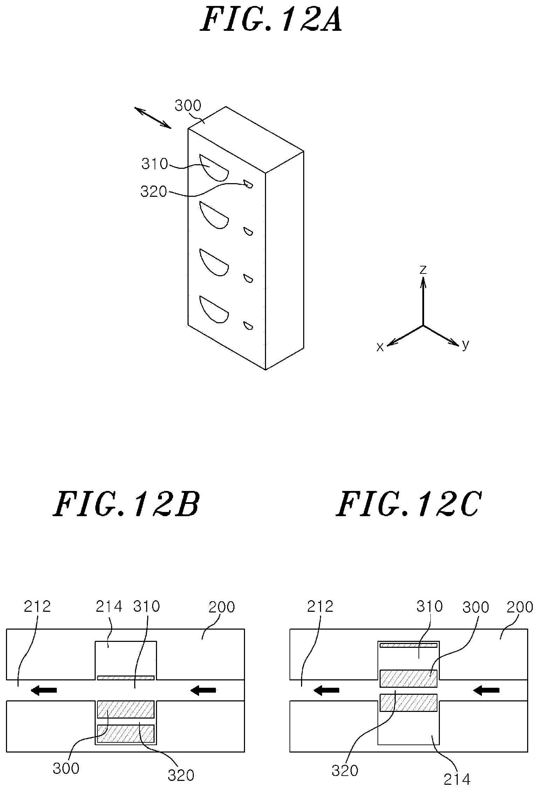

For example, as shown in FIGS. 12A to 12C, the first adjustment flow path 310 and the second adjustment flow path 320 may be disposed to be spaced apart from each other in the first direction (the y direction in FIG. 12A). In addition, a plurality of first adjustment flow paths 310 may be provided and disposed to be spaced apart from each other in the second direction (the z direction in FIG. 12A), and a plurality of second adjustment flow paths 320 may be provided and disposed to be spaced apart from each other in the second direction. The flow path adjuster 300 may be moved in the first direction so that one of the plurality of adjustment flow paths 310 and 320 communicates with the connection flow path 212 or the plurality of adjustment flow paths 310 and 320 are blocked from communicating with the connection flow path 212. In other words, one of the first adjustment flow path 310 and the second adjustment flow path 320 may communicate with the connection flow path 212 by the flow path adjuster 300 that is moved in the first direction.

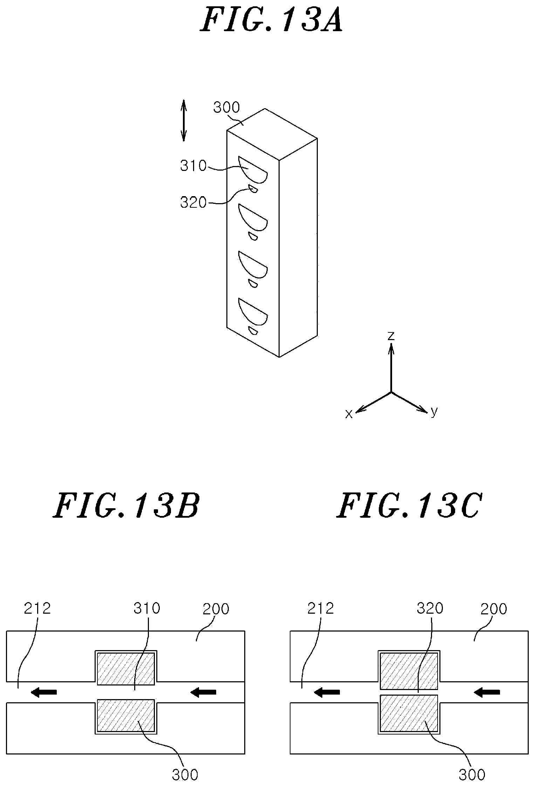

In another example, as shown in FIGS. 13A to 13C, the first adjustment flow path 310 and the second adjustment flow path 320 may be spaced apart from each other in the second direction (the z-direction in FIG. 13A) and alternately disposed in the second direction. The flow path adjuster 300 may be moved in the second direction so that any one of the plurality of adjustment flow paths 310 and 320 communicates with the connection flow path 212 or the plurality of adjustment flow paths 310 and 320 are prevented from communicating with the connection flow path 212. In other words, any one of the first adjustment flow path 310 and the second adjustment flow path 320 may communicate with the connection flow path 212 by the flow path adjuster 300 that is moved in the second direction.

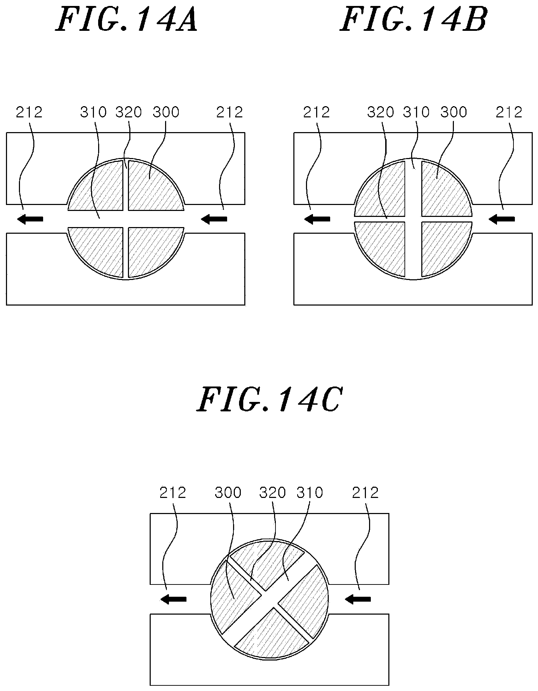

In another example, as shown in FIGS. 14A to 14C, the plurality of adjustment flow paths 310 and 320 may be disposed to intersect each other. In other words, the first adjustment flow path 310 and the second adjustment flow path 320 may intersect each other. The flow path adjuster 300 may be rotated about the second direction so that one of the plurality of adjustment flow paths 310 and 320 may communicate with the connection flow path 212 or the plurality of adjustment flow paths 310 and 320 may be prevented from communicating with the connection flow path 212. In other words, any one of the first adjustment flow path 310 and the second adjustment flow path 320 may communicate with the connection flow path 212 by the flow path adjuster 300 that is rotated about the second direction.

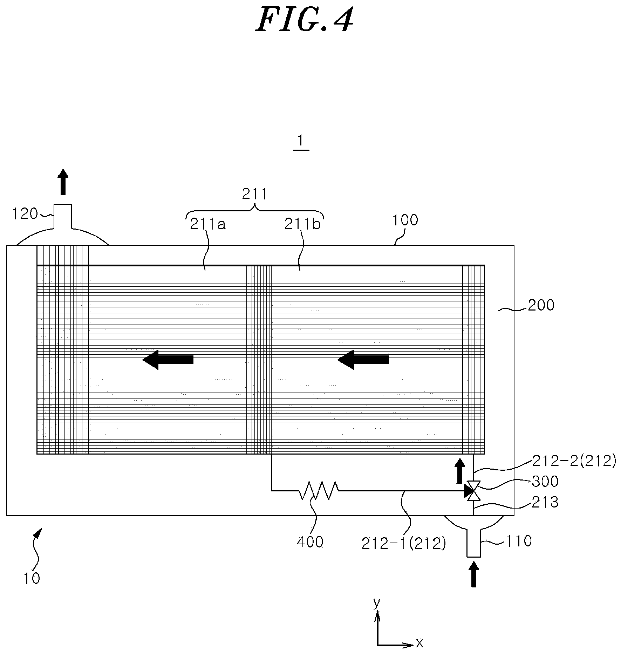

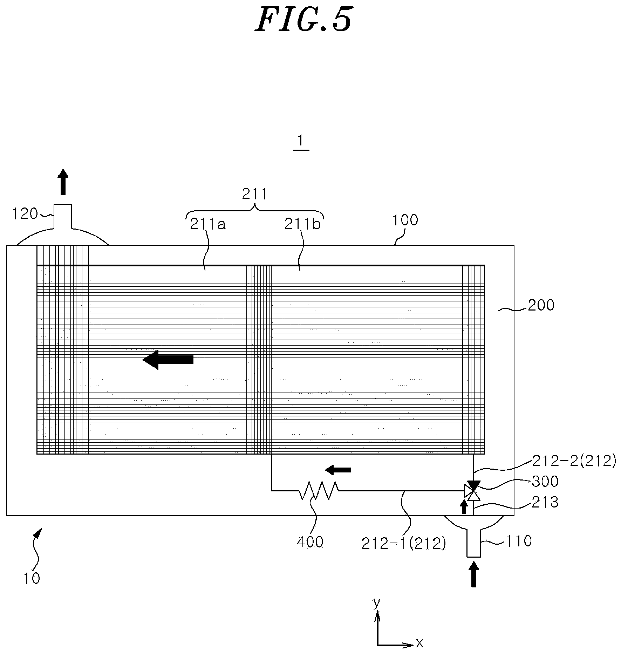

Hereinafter, with reference to FIGS. 4 and 5, it will be described that the flow path adjuster 300 is disposed at a portion where the plurality of connection flow paths 212 and the inflow path 213 are joined. The plurality of connection flow paths 212 connected to the inflow path 213 may be two or more.

The flow path adjuster 300 may be, by the actuator 20, moved in the first direction or the second direction or rotated about the second direction to open and/or close at least one of the plurality of connection flow paths 212. The flow path adjuster 300 may be a three-way valve, but the present disclosure is not limited thereto.

For example, as shown in FIGS. 4 and 5, the plurality of connection flow paths 212 may include a first connection flow path 212-1 for transferring a fluid to the first transfer flow path portion 211a, and a second connection flow path 212-2 for transferring a fluid to the second transfer flow path portion 211b. The flow path adjuster 300 may be disposed at a portion where the first connection flow path 212-1 and the second connection flow path 212-2 are joined. As shown in FIG. 4, the flow path adjuster 300 may open the second connection flow path 212-2 and close the first connection flow path 212-1 so that the fluid flows to the second transfer flow path portion 211b. In addition, as shown in FIG. 5, the flow path adjuster 300 may close the second connection flow path 212-2 and open the first connection flow path 212-1 so that the fluid flows to the first transfer flow path portion 211a.

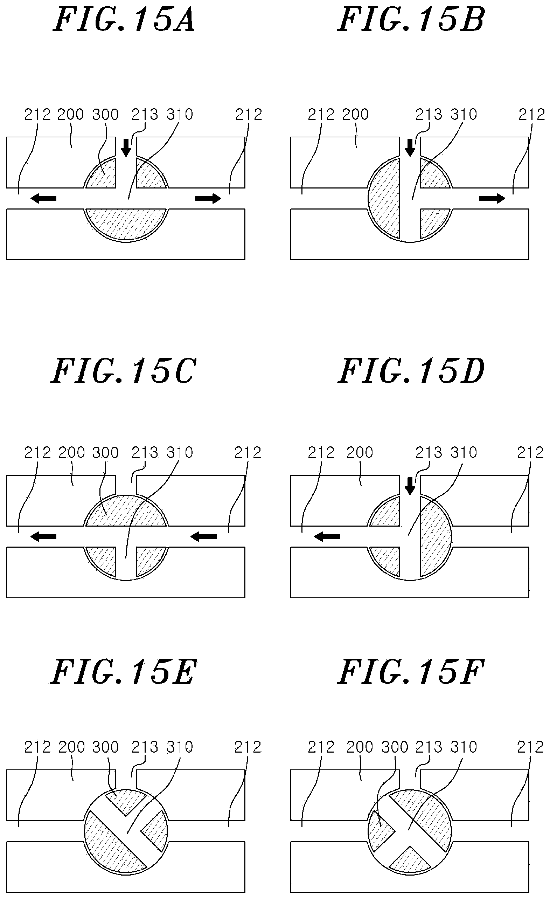

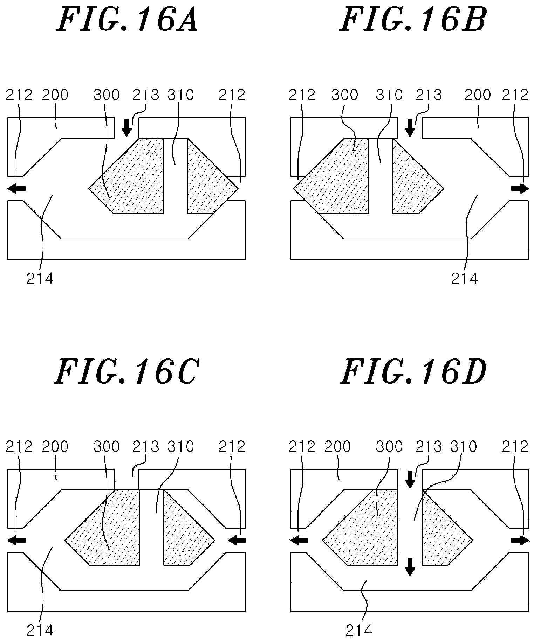

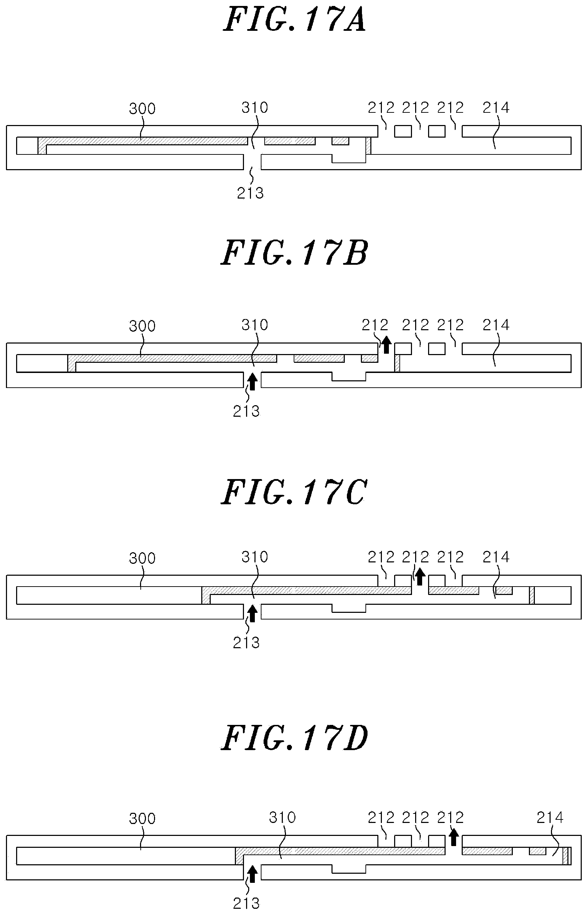

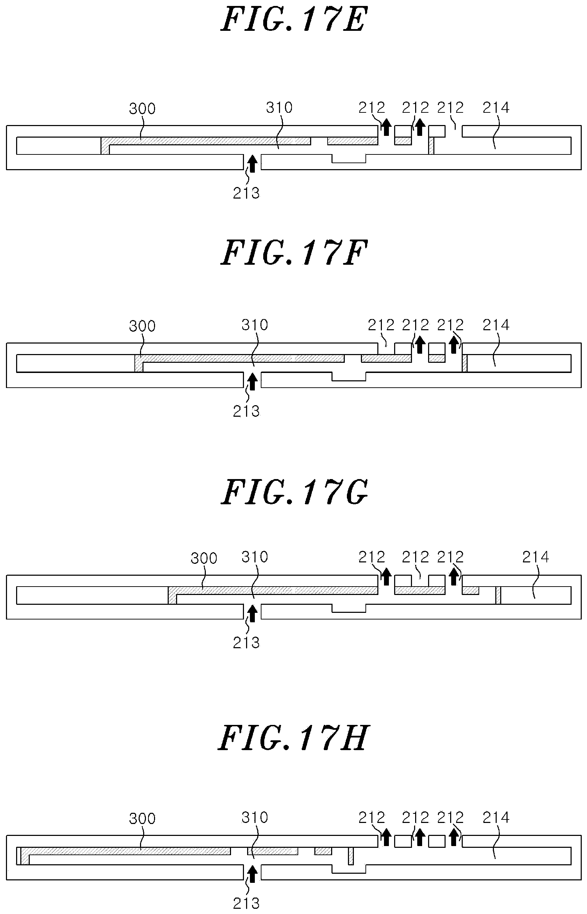

An adjustment flow path 310 may be formed in the flow path adjuster 300. The adjustment flow path 310 may communicate with at least one of the plurality of connection flow paths 212 by movement of the flow path adjuster 300 so as to open or close at least one of the plurality of connection flow paths 212. In other words, the fluid flowing in the inflow path 213 may flow to at least one of the plurality of connection flow paths 212 through the adjustment flow path 310. For example, as shown in FIGS. 15A to 15F, the flow path adjuster 300 may be rotated about the second direction to open at least one of the adjustment flow path 310 and the plurality of connection flow paths 212 or close all of the plurality of connection flow paths 212. In another example, as shown in FIGS. 16A to 17H, the flow path adjuster 300 may be moved in the first direction to open at least one of the plurality of connection flow paths 212 or close all of the plurality of connection flow paths 212. In this case, the fluid may flow to at least one of the plurality of connection flow paths 212 through at least one of the adjustment flow path 310 and the adjuster room 214.

In addition, a plurality of adjustment flow paths 310 and 320 may be formed in the flow path adjuster 300. One of the plurality of adjustment flow paths 310 and 320 may be connected to one of the plurality of connection flow paths 212 by movement of the flow path adjuster 300. In addition, the other one of the plurality of adjustment flow paths 310 and 320 may communicate with the other one of the plurality of connection flow paths 212 by movement of the flow path adjuster 300. In addition, the plurality of adjustment flow paths 310 and 320 may be blocked from the plurality of connection flow paths 212 by movement of the flow path adjuster 300.

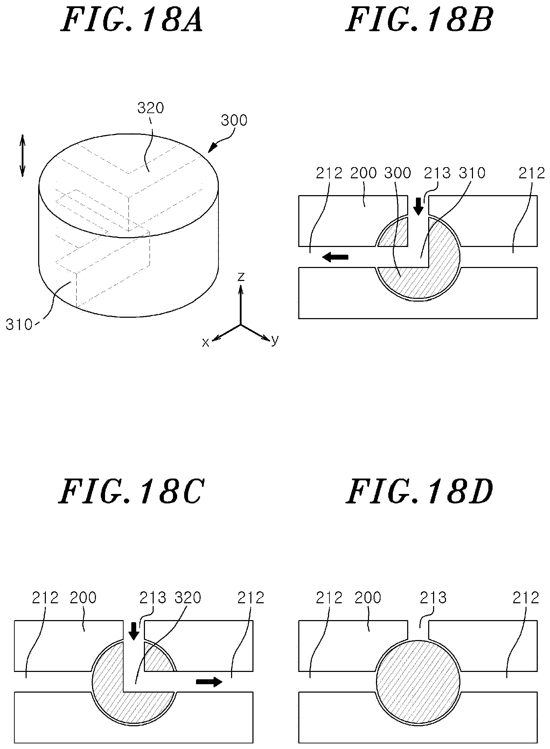

The plurality of adjustment flow paths 310 and 320 may include the first adjustment flow path 310 and the second adjustment flow path 320. The first adjustment flow path 310 may be connected to one of the plurality of connection flow paths 212 by movement of the flow path adjuster 300, and the second adjustment flow path 320 may be connected to the other one of the plurality of connection flow paths 212 by movement of the flow path adjuster 300. For example, as shown in FIGS. 18A to 18D, the first adjustment flow path 310 and the second adjustment flow path 320 may be disposed to be spaced apart from each other in the second direction (the z direction in FIG. 18A), and the flow path adjuster 300 may be moved in the second direction. The first adjustment flow path 310 and the second adjustment flow path 320 may be formed to discharge fluids in different directions. In addition, when the plurality of adjustment flow paths 310 and 320 is disposed to be spaced apart from each other in the second direction, the flow path adjuster 300 may be moved in the second direction so that the plurality of adjustment flow paths 310 and 320 and the plurality of connection flow paths 212 are communicated or blocked from each other in an arbitrary combination.

Meanwhile, the flow path adjuster 300 may be moved in the first direction without an adjustment flow path so that at least one of the plurality of connection flow paths 212 can be opened or closed. In addition, the flow path adjuster 300 may be moved in the first direction so that all of the plurality of connection flow paths can be closed. A fluid flowing from the inflow path 213 by the flow path adjuster 300 may flow into an opened connection flow path 212 among the plurality of connection flow paths 212 through the adjuster room 214.

Referring back to FIGS. 2 to 5, the orifice 400 may be provided in at least one of the plurality of connection flow paths 212 to change flow path resistance of the connection flow paths 212. The orifice 400 may suppress flow instability resulting from boiling of the fluid. For example, the orifice 400 may provide a flow path with a width smaller than a width of the inflow path 213, provide a zigzag-shaped flow path that repeatedly changes in a flow direction of the fluid, or provide a flow path in which a width repeatedly changes. In addition, a plurality of orifices 400 may include a first orifice and a second orifice.

The first orifice may be provided in one of the plurality of connection flow paths 212. The second orifice may be provided in the other one of the plurality of connection flow paths 212 and may have a pressure loss coefficient different from that of the first orifice. In addition, the pressure loss coefficient of the second orifice may be lower than the pressure loss coefficient of the first orifice. In this case, the flow path adjuster 300 may be moved or rotated to close at least one of the plurality of connection flow paths 212 so that a fluid flows into the connection flow path 212 where the first orifice and the second orifice are not provided, the fluid flows into a connection flow path 212 in which the second orifice is provided among the plurality of connection flow paths 212, or the fluid flows into a connection flow path 212 where the first orifice is provided among the plurality of connection flow paths 212. In other words, when the nuclear power plant 1 is operated under conditions of low power and low flow rate, the flow path adjuster 300 may be moved or rotated so that a fluid flows to a connection flow path 212 having the first orifice, and when the nuclear power plant 1 is operated under conditions of high power and high flow rate, the flow path adjuster 300 may be moved or rotated so that a fluid flows to a connection flow path 212 not having the orifice or to a connection flow path 212 having the second orifice with a pressure loss coefficient lower than that of the first orifice.

For example, when the plurality of connection flow paths 212 include a first connection flow path, a second connection flow path, and a third connection flow path, the first orifice may be provided in the first connection flow path, and the second orifice may be provided in the second connection flow path, and no orifice may be provided in the third connection flow path. In this case, the flow path adjuster 300 may be moved in the first direction or the second direction or rotated about the second direction so that the fluid flows to any one of the first connection flow path, the second connection flow path, and the third connection flow path.

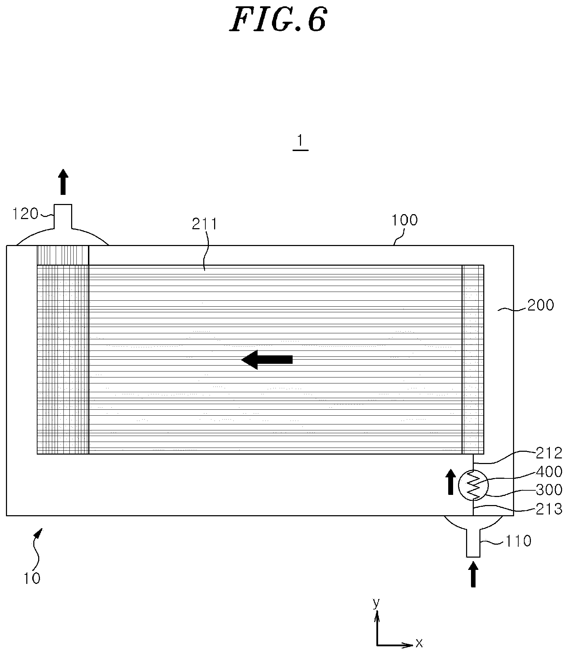

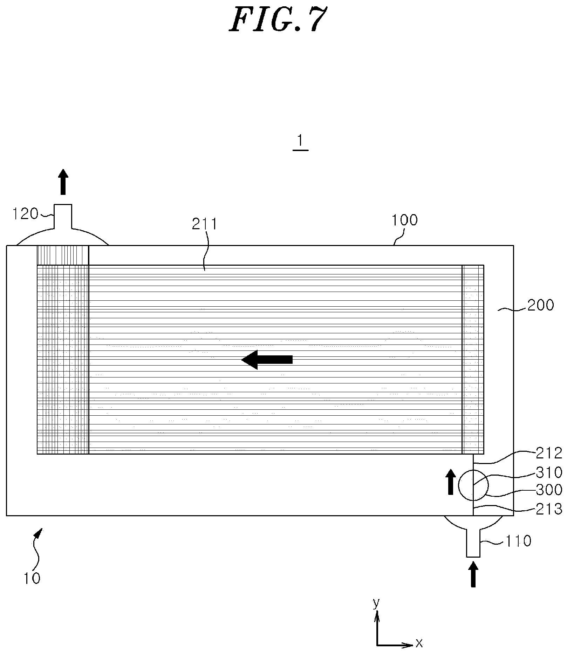

In addition, referring to FIGS. 6 and 7, the orifice 400 may be positioned in the flow path adjuster 300 disposed between the inflow path 213 and the connection flow path 212, and, if necessary, pressure loss caused by the flow of fluid in the connection flow path 212 may be minimized by changing the pressure loss coefficient of the orifice or changing to a flow path of the same type as that of the connection flow path 212. For example, at least one of the plurality of adjustment flow paths 310 of the flow path adjuster 300 may be formed as an orifice 400. In other words, the adjustment flow path 310 and the orifice 400 may be provided in the flow path adjuster 300. Thus, the fluid may flow to a connection flow path through the orifice 400 or the adjustment flow path 310.

The orifice 400 may be connected to the inflow path 213 and the connection flow path 212 as the flow path adjuster 300 is moved in the first direction or the second direction or rotated about the second direction. In other words, the orifice 400 may be positioned between the inflow path 213 and the connection flow path 212 by movement or rotation of the flow path adjuster 300. The flow path adjuster 300 may be moved or rotated to open or close at least one of the plurality of connection flow paths 212 by the orifice 400 so that the fluid flows to a connection flow path in which the orifice is provided or a connection flow path 212 where the orifice is not provided.

For example, the adjustment flow path 310 and the orifice 400 may be disposed in the flow path adjuster 300 to be spaced apart from each other along the second direction. In this case, the flow path adjuster 300 may be moved in the second direction so that the adjustment flow path 310 or the orifice 400 is connected to the connection flow path 212. In other words, as shown in FIG. 6, the flow path adjuster 300 may be moved in the second direction to connect the orifice 400 and the connection flow path 212 so that the fluid flows to the connection flow path 212 through the orifice 400. In addition, as shown in FIG. 7, the flow path adjuster 300 may be moved in the second direction to connect the adjuster room 310 and the connection flow path 212 so that the fluid flows to the connection flow path 212 through the adjustment flow path 310.

In another example, the adjustment flow path 310 and the orifice 400 may be disposed in the flow path adjuster 300 to be spaced apart from each other along the first direction. In this case, the flow path adjuster 300 may be moved in the first direction so that the adjustment flow path 310 or the orifice 400 is connected to the connection flow path 212. In other words, the flow path adjuster 300 may be moved in the first direction to connect the orifice 400 and the connection flow path 212 so that the fluid flows to the connection flow path 212 through the orifice 400. In addition, the flow path adjuster 300 may be moved in the first direction to connect the adjustment flow path 310 and the connection flow path 212 so that the fluid flows to the connection flow path 212 through the adjustment flow path 310.

In another example, the adjustment flow path 310 and the orifice 400 may be disposed in the flow path adjuster 300 to intersect each other. In this case, the flow path adjuster 300 may be rotated about the second direction so that the adjustment flow path 310 or the orifice 400 is connected to the connection flow path 212. In other words, the flow path adjuster 300 may be rotated about the second direction to connect the orifice 400 and the connection flow path 212 so that the fluid flows to the connection flow path 212 through the orifice 400. In addition, the flow path adjuster 300 may be rotated about the second direction to connect the adjustment flow path 310 and the connection flow path 212 so that a fluid flows to the connection flow path 212 through the adjustment flow path 310.

In addition, a plurality of orifices 400 may be provided and may provide different pressure loss coefficients, respectively. By means of the plurality of orifices 400, the flow path adjuster 300 may be moved in the first direction or the second direction or rotated about the second direction so that an orifice corresponding to a required pressure loss coefficient among the plurality of orifices 400 or the adjustment flow path 310 is disposed between the inflow path 213 and the connection flow path 212. The adjustment flow path 310 may be changed to a flow path of the same type so as to minimize pressure loss caused by a fluid flow in the connection flow path 212.

The plurality of orifices 400 formed in the flow path adjuster 300 may include a first orifice and a second orifice having a pressure loss coefficient different from that of the first orifice. In this case, when the nuclear power plant 1 is operated under conditions of low power and low flow rate, the flow path adjuster 300 may be moved or rotated to connect the first orifice with the connection flow path 212, and when the nuclear power plant 1 is operated under high power and high flow rate conditions, the flow path adjuster 300 may be moved or rotated to connect the connection flow path 212 and the second orifice having a pressure loss coefficient lower than that of the first orifice or to connect the connection flow path 212 and an adjustment flow path 310 having a low pressure loss coefficient.

For example, the adjustment flow path 310, the first orifice, and the second orifice may be disposed in the flow path adjuster 300 to be spaced apart from each other in the second direction. In this case, the flow path adjuster 300 may be moved in the second direction so that the adjustment flow path 310, the first orifice, or the second orifice is connected to the connection flow path 212. In other words, the flow path adjuster 300 may be moved in the second direction to connect the first orifice and the connection flow path 212 so that a fluid flows to the connection flow path 212 through the first orifice. In addition, the flow path adjuster 300 may be moved in the second direction to connect the second orifice and the connection flow path 212 so that a fluid flows to the connection flow path 212 through the second orifice. In addition, the flow path adjuster 300 may be moved in the second direction to connect the adjustment flow path 310 and the connection flow path 212 so that a fluid flows to the connection flow path 212 through the adjustment flow path 310.

In another example, the adjustment flow path 310, the first orifice, and the second orifice may be disposed at the flow path adjuster 300 to be spaced apart from each other in the first direction. In this case, the flow path adjuster 300 may be moved in the first direction so that the adjustment flow path 310, the first orifice, or the second orifice is connected to the connection flow path 212. In other words, the flow path adjuster 300 may be moved in the first direction to connect the first orifice and the connection flow path 212 so that a fluid flows to the connection flow path 212 through the first orifice. In addition, the flow path adjuster 300 may be moved in the first direction to connect the second orifice and the connection flow path 212 so that a fluid flows to the connection flow path 212 through the second orifice. In addition, the flow path adjuster 300 may be moved in the first direction to connect the adjustment flow path 310 and the connection flow path 212 so that the fluid flows to the connection flow path 212 through the adjustment flow path 310.

In another example, the adjustment flow path 310, the first orifice, and the second orifice may be disposed in the flow path adjuster 300 to intersect each other. In this case, the flow path adjuster 300 may be rotated about the second direction so that the adjustment flow path 310, the first orifice, or the second orifice is connected to the connection flow path 212. In other words, the flow path adjuster 300 may be rotated about the second direction to connect the first orifice and the connection flow path 212 so that a fluid flows to the connection flow path 212 through the first orifice. In addition, the flow path adjuster 300 may be rotated about the second direction to connect the second orifice and the connection flow path 212 so that a fluid flows to the connection flow path 212 through the second orifice. In addition, the flow path adjuster 300 may be rotated about the second direction to connect the adjustment flow path 310 and the connection flow path 212 so that a fluid flows to the connection flow path 212 through the adjustment flow path 310.

The orifice 400 may be formed in at least one of the second flow module and the flow path adjuster to suppress flow instability resulting from boiling of the second fluid. For example, the orifice 400 may be formed at a fixed portion in the second flow path module, and the fixed portion in the second flow path module may refer to the connection flow path 212. In addition, the orifice 400 may vary a pressure loss of the second flow path module through which the second fluid flows by the flow path adjuster 300.

A cover portion 500 is provided at an exterior of the body 100 to prevent the flow path adjuster 300 from being separated from the body 100 and to prevent the first fluid or the second fluid from leaking to the outside of the body 100 through a gap between the flow path adjuster 300 and the plate 200. For example, the cover portion 500 may be connected to the flow path adjuster 300 protruding to the outside of the body 100. In addition, a packing may be installed between the cover portion 500 and the flow path adjuster 300. The cover portion 500 may be provided in plural to cover both ends of the flow path adjuster 300 passing through the body 100.

The actuator 20 may provide a driving force for moving one or more flow path adjusters 300. In other words, at least one of the plurality of flow path adjusters 300 may be simultaneously moved by the actuator 20.

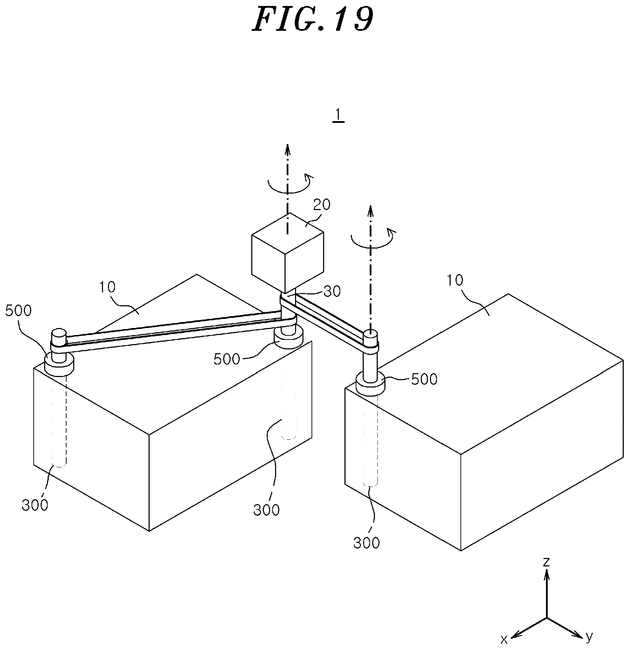

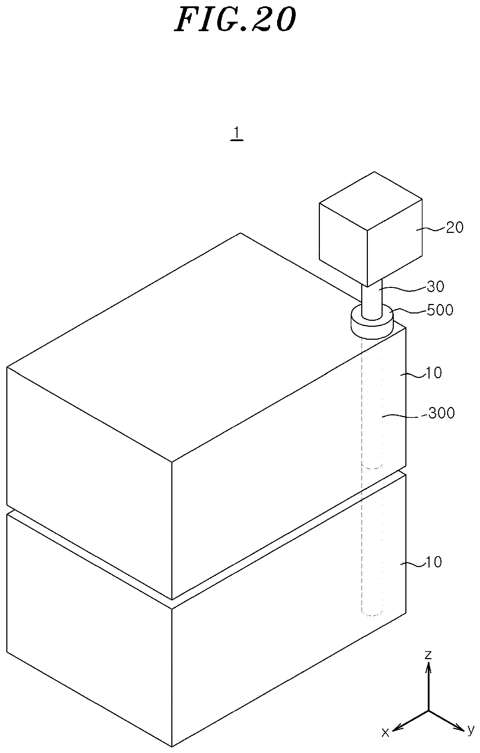

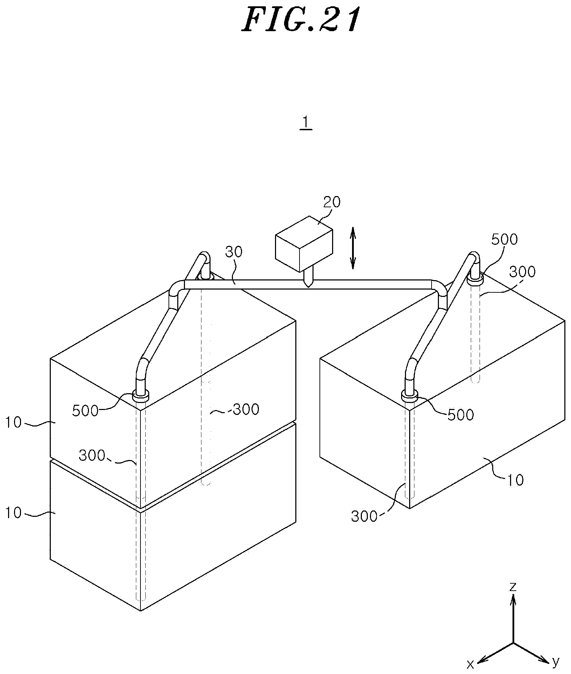

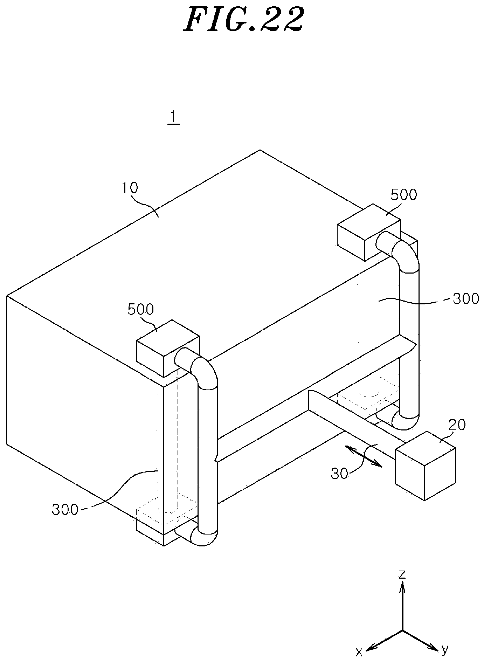

Referring to FIGS. 19 to 22, the connection member 30 may be connected to the plurality of flow path adjusters 300 to transfer the driving force of the actuator 20 to a single flow path adjuster 300 or a plurality of flow path adjusters 300 provided at a single heat exchanger 10 or a plurality of heat exchangers 10. The flow path adjusters 300 respectively provided in the plurality of heat exchangers 10 via the connection member 30 may be simultaneously moved in the first direction, rotated about the first direction, moved in the second direction, or rotated about the second direction. In addition, the connecting member 30 may pass through the cover portion 500 to be connected to the flow path adjuster 300.

Hereinafter, operation and effects of the nuclear power plant 1 according to the embodiment of the present disclosure will be described.

In the heat exchanger 10 of the nuclear power plant 1 according to the embodiment of the present disclosure, the fluid is selectively flowed as needed in the plurality of transfer flow paths 211 by the flow path adjuster 300, or the fluid selectively passes the orifice 400 based on the output power of the nuclear power plant 1. Accordingly, the flow path resistance of at least a part of the flow module is adjusted so that the heat exchanger 10 can be operated in a state where the characteristics thereof are optimal depending on output power of the nuclear power plant 1. For example, when a high flow rate of the second fluid is supplied for the high-power operation, it is possible to limit the pressure loss while securing the amount of heat transfer by preventing the second fluid from passing through the orifice 400 using the flow path adjuster 300 to increase the passage length of the transfer flow path portion 211. On the other hand, during a low-power operation, a low flow rate of the second fluid is supplied and flow instability may be intensified due to boiling of the second fluid. In this case, the second fluid may be controlled using the flow path adjuster 300 to pass through the orifice 400 having a high pressure loss coefficient and a passage length of the transfer flow path portion 211 of the flow path module 210 may be reduced, thereby limiting a pressure loss while suppressing the flow instability.

In addition, in the event of an accident at the nuclear power plant 1, when residual heat removal such as an operation of a passive residual heat removal system is in progress, a fluid is allowed to flow only in some of the plurality of transfer flow path portions 211 or is prevented from passing through the orifice 400 by the flow path adjuster 300, thereby reducing a pressure loss in the flow path module, which increases an amount of heat removed and thereby improves safety of the nuclear power plant 1.

## Claims

1. A heat exchanger comprising:
a body (100) having an inlet header (110) through which a fluid is introduced, and an outlet header (120) through which the fluid is discharged;
one or more plates (200) accommodated in the body (100) and provided with flow path modules providing flow paths for the fluid introduced through the inlet header (110) to flow to the outlet header (120); and
at least one flow path adjuster (300) each having at least a portion thereof accommodated in the body (100) and being movable or rotatable to open or close a part or all of the flow paths or to change directions of the flow paths so that a flow of the fluid is adjusted, **characterized in that**
the flow path modules comprise a plurality of transfer flow path portions (211) communicating with each other and providing a plurality of passages through which the fluid flows to the outlet header (120),
the fluid flows to at least one of the plurality of transfer flow path portions (211) by the at least one flow path adjuster (300), **characterized in that**
the plurality of transfer flow path portions (211) comprises a first transfer flow path portion (211a) communicating with the outlet header (120), and a second transfer flow path portion (211b) communicating with the first transfer flow path portion (211a),
the fluid flows to at least one of the first transfer flow path portion (211a) and the second transfer flow path portion (211b) by the at least one flow path adjuster (300) so that the fluid sequentially passes through the second transfer flow path portion (211b) and the first transfer flow path portion (211a) to flow to the outlet header (120), or flow to the outlet header (120) through first transfer flow path portion (211a) without flowing to the second transfer flow path portion (211b).

2. The heat exchanger of claim 1, wherein the at least one flow path adjuster (300) is movable in a first direction along surfaces of the one or more plates (200), rotatable about the first direction, movable in a second direction crossing the first direction, or rotatable about the second direction.

3. The heat exchanger of claim 1, wherein the flow modules further comprise a plurality of connection flow paths (212) respectively connected to the plurality of transfer flow path portions (211) to provide flow paths through which the fluid introduced through the inlet header (110) is transferred to the plurality of transfer flow path portions (211), and
wherein the at least one flow path adjuster (300) is provided at the plurality of connection flow paths (212) and is moved or rotated to open and close the plurality of connection flow paths (212), respectively.

4. The heat exchanger of claim 3,
wherein at least one adjustment flow path through which the fluid is allowed to flow is formed in the at least one flow path adjuster (300), and
wherein by the movement or rotation of the at least one flow path adjuster (300), the at least one adjustment flow path communicates with the plurality of connection flow paths (212) or the communication between the at least one adjustment flow path and the plurality of connection flow paths (212) is blocked.

5. The heat exchanger of claim 4, wherein the at least one adjustment flow path includes a plurality of adjustment flow paths,
wherein the plurality of adjustment flow paths is formed in different shapes, and
wherein the at least one flow path adjuster (300) is moved or rotated to allow one of the plurality of adjustment flow paths to communicate with the plurality of connection flow paths (212) or to block the communication between the plurality of adjustment flow paths and the plurality of connection flow paths (212).

6. The heat exchanger of claim 5, insofar as dependent upon claim 2, wherein the plurality of adjustment flow paths is disposed to be spaced apart from each other in the first direction, and
wherein the flow path adjuster (300) is moved in the first direction to allow one of the plurality of adjustment flow paths to communicate with one of the plurality of connection flow paths (212) or to block the communication between the plurality of adjustment flow paths and the plurality of connection flow paths (212).

7. The heat exchanger of claim 6, insofar as dependent upon claim 2, wherein the plurality of adjustment flow paths is disposed to be spaced apart from each other in the second direction, and
wherein the at least one flow path adjuster (300) is moved in the second direction to allow one of the plurality of adjustment flow paths to communicate with one of the plurality of connection flow paths (212) or to block the communication between the plurality of adjustment flow paths and the plurality of connection flow paths (212).

8. The heat exchanger of claim 6, insofar as dependent upon claim 2, wherein the plurality of adjustment flow paths is arranged to intersect each other, and
wherein the at least one flow path adjuster (300) is rotated about the second direction to allow one of the plurality of adjustment flow paths to communicate with one of the plurality of connection flow paths (212) or to block the communication between the plurality of adjustment flow paths and the plurality of connection flow paths (212).

9. The heat exchanger of claim 1, wherein the flow modules comprise a plurality of connection flow paths (212) respectively connected to the plurality of transfer flow path portions (211) to provide passages through which the fluid is transferred to the plurality of transfer flow path portions (211), and
wherein the at least one flow path adjuster (300) is moved or rotated to open or close at least one of the plurality of connection flow paths (212).

10. The heat exchanger of claim 9, insofar as dependent upon claim 2, wherein a plurality of adjustment flow paths through which the fluid flows is formed in the at least one flow path adjuster (300),
wherein the plurality of adjustment flow paths is disposed to be spaced apart from each other in the second direction, and
wherein the at least one flow path adjuster (300) is moved in the second direction so that the plurality of adjustment flow paths and the plurality of connection flow paths (212) are connected with each other or are blocked from each other in an arbitrary combination.

11. The heat exchanger of claim 9 or 10, insofar as dependent upon claim 2, wherein the flow path modules further comprise an adjuster room accommodating a portion of the at least one flow path adjuster (300) and providing a space in which the at least one flow path adjuster (300) is movable in the first direction, and
wherein the at least one flow path adjuster (300) is moved in the first direction to open at least one of the plurality of connection flow paths (212) so that the fluid flows to the at least one connection flow path (212) through the adjuster room, or the at least one flow path adjuster (300) is moved in the first direction to close the plurality of connection flow paths (212).

12. The heat exchanger of any one of claims 9 to 11, further comprising:
an orifice (400) provided in one or more of the plurality of connection flow paths (212) to suppress flow instability resulting from boiling of the fluid,
wherein the at least one flow path adjuster (300) is moved or rotated to open and close one or more of the plurality of connection flow paths (212) so that the fluid flows to a connection flow path (212) having the orifice or to a connection flow path (212) without the orifice (400).

13. The heat exchanger of claim 12, wherein the orifice (400) includes a plurality of orifices (400), and the plurality of orifices (400) includes:
a first orifice provided in one of the plurality of connection flow paths (212), and
a second orifice provided in another one of the plurality of connection flow paths (212) and having a pressure loss coefficient different from a pressure loss coefficient of the first orifice, and
wherein the at least one flow path adjuster (300) is moved or rotated so that the fluid flows to the connection flow path (212) having the first orifice among the plurality of connection flow paths (212), the fluid flows to the connection path having the second orifice among the plurality of connection flow paths (212), or the fluid flows to a connection flow path (212) having neither the first orifice nor the second orifice.

## Patentansprüche

1. Wärmetauscher, umfassend:
einen Körper (100) mit einem Einlasskopfstück (110), durch das ein Fluid eingeführt wird, und mit einem Auslasskopfstück (120), durch das das Fluid ausgestoßen wird;
eine oder mehrere Platten (200), die in dem Körper (100) aufgenommen sind und mit Strömungspfadmodulen versehen sind, die Strömungspfade für das durch das Einlasskopfstück (110) eingeführte Fluid bereitstellen, damit dieses zu dem Auslasskopfstück (120) strömen kann; und
zumindest einen Strömungspfadeinsteller (300), wobei jeweils zumindest ein Abschnitt davon in dem Körper (100) aufgenommen ist und bewegbar oder drehbar ist, um einen Teil oder alle der Strömungspfade zu öffnen oder zu schließen oder um die Richtungen der Strömungspfade zu ändern, so dass eine Strömung des Fluids eingestellt wird, **dadurch gekennzeichnet, dass** die Strömungspfadmodule eine Mehrzahl von
Übertragungsströmungspfadabschnitten (211) umfassen, die miteinander kommunizieren und eine Mehrzahl von Durchgängen bereitstellen, durch die das Fluid zu dem Auslasskopfstück (120) strömt,
das Fluid durch den zumindest einen Strömungspfadeinsteller (300) zu zumindest einem der Mehrzahl von Übertragungsströmungspfadabschnitten (211) strömt,
**dadurch gekennzeichnet, dass**
die Mehrzahl von Übertragungsströmungspfadabschnitten (211) einen ersten Übertragungsströmungspfadabschnitt (211a), der mit dem Auslasskopfstück (120) kommuniziert, und einen zweiten Übertragungsströmungspfadabschnitt (211b), der mit dem ersten Übertragungsströmungspfadabschnitt (211a) kommuniziert, umfasst,
das Fluid durch den zumindest einen Strömungspfadeinsteller (300) zu zumindest einem von dem ersten Übertragungsströmungspfadabschnitt (211a) und dem zweiten Übertragungsströmungspfadabschnitt (211b) strömt, so dass das Fluid nacheinander durch den zweiten
Übertragungsströmungspfadabschnitt (211b) und den ersten Übertragungsströmungspfadabschnitt (211a) hindurchtritt, um zu dem Auslasskopfstück (120) zu strömen, oder durch den ersten Übertragungsströmungspfadabschnitt (211a) zu dem Auslasskopfstück (120) strömt, ohne zu dem zweiten Übertragungsströmungspfadabschnitt (211b) zu strömen.

2. Wärmetauscher nach Anspruch 1, wobei der zumindest eine Strömungspfadeinsteller (300) entlang der Oberflächen der einen oder der mehreren Platten (200) in einer ersten Richtung bewegbar ist, um die erste Richtung drehbar ist, in einer zweiten Richtung, die die erste Richtung kreuzt, bewegbar ist oder um die zweite Richtung drehbar ist.

3. Wärmetauscher nach Anspruch 1, wobei die Strömungsmodule weiterhin eine Mehrzahl von Verbindungsströmungspfaden (212) umfassen, die jeweils mit der Mehrzahl von Übertragungsströmungspfadabschnitten (211) verbunden sind, um Strömungspfade bereitzustellen, durch die das durch das Einlasskopfstück (110) eingeführte Fluid zu der Mehrzahl von Übertragungsströmungspfadabschnitten (211) übertragen wird, und
wobei der zumindest eine Strömungspfadeinsteller (300) an der Mehrzahl von Verbindungsströmungspfaden (212) vorgesehen ist und bewegt oder gedreht wird, um die Mehrzahl von Verbindungsströmungspfaden (212) zu öffnen bzw. zu schließen.

4. Wärmetauscher nach Anspruch 3,
wobei zumindest ein Einstellströmungspfad, durch den das Fluid strömen kann, in dem zumindest einen Strömungspfadeinsteller (300) ausgebildet ist, und wobei durch die Bewegung oder Drehung des zumindest einen Strömungspfadeinstellers (300) der zumindest eine Einstellströmungspfad mit der Mehrzahl von Verbindungsströmungspfaden (212) kommuniziert oder die Kommunikation zwischen dem zumindest einen Einstellströmungspfad und der Mehrzahl von Verbindungsströmungspfaden (212) blockiert wird.

5. Wärmetauscher nach Anspruch 4, wobei der zumindest eine Einstellströmungspfad eine Mehrzahl von Einstellströmungspfaden beinhaltet, wobei die Mehrzahl von Einstellströmungspfaden in unterschiedlichen Formen ausgebildet ist, und
wobei der zumindest eine Strömungspfadeinsteller (300) bewegt oder gedreht wird, um zu ermöglichen, dass einer der Mehrzahl von Einstellströmungspfaden mit der Mehrzahl von Verbindungsströmungspfaden (212) kommuniziert, oder um die Kommunikation zwischen der Mehrzahl von Einstellströmungspfaden und der Mehrzahl von Verbindungsströmungspfaden (212) zu blockieren.

6. Wärmetauscher nach Anspruch 5, soweit abhängig von Anspruch 2, wobei die Mehrzahl von Einstellströmungspfaden so angeordnet ist, dass sie in der ersten Richtung voneinander beabstandet sind, und
wobei der Strömungspfadeinsteller (300) in der ersten Richtung bewegt wird, um zu ermöglichen, dass einer der Mehrzahl von Einstellströmungspfaden mit einem der Mehrzahl von Verbindungsströmungspfaden (212) kommuniziert, oder um die Kommunikation zwischen der Mehrzahl von Einstellströmungspfaden und der Mehrzahl von Verbindungsströmungspfaden (212) zu blockieren.

7. Wärmetauscher nach Anspruch 6, soweit abhängig von Anspruch 2, wobei die Mehrzahl von Einstellströmungspfaden so angeordnet ist, dass sie in der zweiten Richtung voneinander beabstandet sind, und
wobei der zumindest eine Strömungspfadeinsteller (300) in der zweiten Richtung bewegt wird, um zu ermöglichen, dass einer der Mehrzahl von Einstellströmungspfaden mit einem der Mehrzahl von Verbindungsströmungspfaden (212) kommuniziert, oder um die Kommunikation zwischen der Mehrzahl von Einstellströmungspfaden und der Mehrzahl von Verbindungsströmungspfaden (212) zu blockieren.

8. Wärmetauscher nach Anspruch 6, soweit abhängig von Anspruch 2, wobei die Mehrzahl von Einstellströmungspfaden so angeordnet ist, dass sie sich schneiden, und
wobei der zumindest eine Strömungspfadeinsteller (300) um die zweite Richtung gedreht wird, um zu ermöglichen, dass einer der Mehrzahl von Einstellströmungspfaden mit einem der Mehrzahl von
Verbindungsströmungspfaden (212) kommuniziert, oder um die Kommunikation zwischen der Mehrzahl von Einstellströmungspfaden und der Mehrzahl von Verbindungsströmungspfaden (212) zu blockieren.

9. Wärmetauscher nach Anspruch 1, wobei die Strömungsmodule eine Mehrzahl von Verbindungsströmungspfaden (212) umfassen, die jeweils mit der Mehrzahl von Übertragungsströmungspfadabschnitten (211) verbunden sind, um Durchgänge bereitzustellen, durch die das Fluid zu der Mehrzahl von Übertragungsströmungspfadabschnitten (211) übertragen wird, und
wobei der zumindest eine Strömungspfadeinsteller (300) bewegt oder gedreht wird, um den zumindest einen der Mehrzahl von Verbindungsströmungspfaden (212) zu öffnen oder zu schließen.

10. Wärmetauscher nach Anspruch 9, soweit abhängig von Anspruch 2, wobei in dem zumindest einen Strömungspfadeinsteller (300) eine Mehrzahl von Einstellströmungspfaden, durch die das Fluid strömt, ausgebildet ist,
wobei die Mehrzahl von Einstellströmungspfaden so angeordnet ist, dass sie in der zweiten Richtung voneinander beabstandet sind, und
wobei der zumindest eine Strömungspfadeinsteller (300) in der zweiten Richtung bewegt wird, um zu ermöglichen, dass die Mehrzahl von Einstellströmungspfaden und die Mehrzahl von Verbindungsströmungspfaden in einer beliebigen Kombination (212) miteinander verbunden werden oder voneinander blockiert werden.

11. Wärmetauscher nach Anspruch 9 oder 10, soweit abhängig von Anspruch 2, wobei die Strömungspfadmodule weiterhin einen Einstellraum umfassen, der einen Abschnitt des zumindest einen Strömungspfadeinstellers (300) aufnimmt und einen Raum bereitstellt, in dem der zumindest eine Strömungspfadeinsteller (300) in der ersten Richtung bewegbar ist, und wobei der zumindest eine Strömungspfadeinsteller (300) in der ersten Richtung bewegt wird, um zumindest einen der Mehrzahl von Verbindungsströmungspfaden (212) zu öffnen, so dass das Fluid durch den Einstellraum zu dem zumindest einen Verbindungsströmungspfad (212) strömt, oder der zumindest eine Strömungspfadeinsteller (300) in der ersten Richtung bewegt wird, um die Mehrzahl von Verbindungsströmungspfaden (212) zu schließen.

12. Wärmetauscher nach einem der Ansprüche 9 bis 11, weiterhin umfassend:
eine Öffnung (400), die in einem oder mehreren der Mehrzahl von Verbindungsströmungspfaden (212) vorgesehen ist, um die Strömungsinstabilität zu unterdrücken, die durch das Sieden des Fluids entsteht,
wobei der zumindest eine Strömungspfadeinsteller (300) bewegt oder gedreht wird, um einen oder mehrere der Mehrzahl von Verbindungsströmungspfaden (212) zu öffnen und zu schließen, so dass das Fluid zu einem Verbindungsströmungspfad (212) mit der Öffnung oder zu einem Verbindungsströmungspfad (212) ohne die Öffnung (400) strömt.

13. Wärmetauscher nach Anspruch 12, wobei die Öffnung (400) eine Mehrzahl von Öffnungen (400) beinhaltet und die Mehrzahl von Öffnungen (400) beinhaltet:
eine erste Öffnung, die in einem der Mehrzahl von
Verbindungsströmungspfaden (212) vorgesehen ist; und
eine zweite Öffnung, die in einem anderen der Mehrzahl von Verbindungsströmungspfaden (212) vorgesehen ist und einen Druckverlustkoeffizienten aufweist, der sich von einem
Druckverlustkoeffizienten der ersten Öffnung unterscheidet, und wobei der zumindest eine Strömungspfadeinsteller (300) bewegt oder gedreht wird, so dass das Fluid zu dem Verbindungsströmungspfad (212) mit der ersten Öffnung aus der Mehrzahl von Verbindungsströmungspfaden (212) strömt, das Fluid zu dem Verbindungsströmungspfad mit der zweiten Öffnung aus der Mehrzahl von Verbindungsströmungspfaden (212) strömt oder das Fluid zu einem Verbindungsströmungspfad (212) strömt, der weder die erste Öffnung noch die zweite Öffnung aufweist.

## Revendications

1. Échangeur de chaleur, comprenant :
un corps (100) ayant un collecteur d'entrée (110) par lequel un fluide est introduit, et un collecteur de sortie (120) par lequel le fluide est évacué ;
une ou plusieurs plaques (200) logées dans le corps (100) et pourvues de modules de trajet d'écoulement présentant des trajets d'écoulement pour que le fluide introduit par le collecteur d'entrée (110) s'écoule vers le collecteur de sortie (120) ; et
au moins un régulateur de trajet d'écoulement (300) dont au moins une partie est logée dans le corps (100), déplaçable ou rotatif pour ouvrir ou fermer une partie ou la totalité des trajets d'écoulement ou pour changer les directions des trajets d'écoulement de manière à ajuster le flux de fluide, **caractérisé en ce que**
les modules de trajet d'écoulement comprennent une pluralité de parties de trajet d'écoulement de transfert (211) communiquant entre elles et présentant une pluralité de passages par lesquels le fluide s'écoule vers le collecteur de sortie (120),
le fluide s'écoule vers au moins une partie de la pluralité de parties de trajet d'écoulement de transfert (211) par ledit au moins un régulateur de trajet d'écoulement (300), **caractérisé en ce que**
la pluralité de parties de trajet d'écoulement de transfert (211) comprend une première partie de trajet d'écoulement de transfert (211a) communiquant avec le collecteur de sortie (120), et une deuxième partie de trajet d'écoulement de transfert (211b) communiquant avec la première partie de trajet d'écoulement de transfert (211a),
le fluide s'écoule vers la première partie de trajet d'écoulement de transfert (211a) et/ou la deuxième partie de trajet d'écoulement de transfert (211b) par ledit au moins un régulateur de trajet d'écoulement (300), de sorte que le fluide traverse séquentiellement la deuxième partie de trajet d'écoulement de transfert (211b) et la première partie de trajet d'écoulement de transfert (211a) pour s'écouler vers le collecteur de sortie (120), ou s'écouler vers le collecteur de sortie (120) par la première partie de trajet d'écoulement de transfert (211a) sans s'écouler vers la deuxième partie de trajet d'écoulement de transfert (211b).

2. Échangeur de chaleur selon la revendication 1, où ledit au moins un régulateur de trajet d'écoulement (300) est déplaçable dans une première direction le long des surfaces de la ou des plaques (200), rotatif autour de la première direction, déplaçable dans une deuxième direction croisant la première direction, ou rotatif autour de la deuxième direction.

3. Échangeur de chaleur selon la revendication 1, où les modules d'écoulement comprennent en outre une pluralité de trajets d'écoulement de raccordement (212) reliés à la pluralité de parties de trajet d'écoulement de transfert (211) respectives de manière à présenter des trajets d'écoulement par lesquels le fluide introduit par le collecteur d'entrée (110) est transféré vers la pluralité de parties de trajet de flux de transfert (211), et
où ledit au moins un régulateur de trajet d'écoulement (300) est disposé sur la pluralité de trajets d'écoulement de raccordement (212) et est déplacé ou tourné pour ouvrir et fermer la pluralité de trajets d'écoulement de raccordement (212) respectifs.

4. Échangeur de chaleur selon la revendication 3,
où au moins un trajet d'écoulement d'ajustement par lequel le fluide est admis à s'écouler est formé dans ledit au moins un régulateur de trajet d'écoulement (300), et
où, par déplacement ou rotation dudit au moins un régulateur de trajet d'écoulement (300), ledit au moins un trajet d'écoulement d'ajustement communique avec la pluralité de trajets d'écoulement de raccordement (212), ou la communication entre ledit au moins un trajet d'écoulement d'ajustement et la pluralité de trajets d'écoulement de raccordement (212) est bloquée.

5. Échangeur de chaleur selon la revendication 4, où au moins un trajet d'écoulement d'ajustement comprend une pluralité de trajets d'écoulement d'ajustement,
où la pluralité de trajets d'écoulement d'ajustement est présentée sous différentes formes, et où ledit au moins un régulateur de trajet d'écoulement (300) es déplacé ou tourné pour permettre à l'un des trajets de la pluralité de trajets d'écoulement d'ajustement de communiquer avec la pluralité de trajets d'écoulement de raccordement (212), ou pour bloquer la communication entre la pluralité de trajets d'écoulement d'ajustement et la pluralité de trajets d'écoulement de raccordement (212).

6. Échangeur de chaleur selon la revendication 5, si dépendante de la revendication 2, où la pluralité des trajets d'écoulement d'ajustement sont disposés de manière à être espacés les uns des autres dans la première direction, et
où le régulateur de trajet d'écoulement (300) est déplacé dans la première direction pour permettre à l'un des trajets de la pluralité de trajets d'écoulement d'ajustement de communiquer avec l'un des trajets de la pluralité de trajets de raccordement (212) ou pour bloquer la communication entre la pluralité de trajets d'écoulement d'ajustement et la pluralité de trajets d'écoulement de raccordement (212).

7. Échangeur de chaleur selon la revendication 6, si dépendante de la revendication 2, où la pluralité des trajets d'écoulement d'ajustement sont disposés de manière à être espacés les uns des autres dans la deuxième direction, et
où ledit au moins un régulateur de trajet d'écoulement (300) est déplacé dans la deuxième direction pour permettre à l'un des trajets de la pluralité de trajets d'écoulement d'ajustement de communiquer avec l'un des trajets de la pluralité de trajets d'écoulement de raccordement (212) ou pour bloquer la communication entre la pluralité de trajets d'écoulement d'ajustement et la pluralité de trajets d'écoulement de raccordement (212).

8. Échangeur de chaleur selon la revendication 6, si dépendante de la revendication 2, où la pluralité des trajets d'écoulement d'ajustement sont disposés de manière à se croiser, et
où ledit au moins un régulateur de trajet d'écoulement (300) est tourné autour de la deuxième direction pour permettre à l'un des trajets de la pluralité de trajets d'écoulement d'ajustement de communiquer avec l'un des trajets de la pluralité de trajets d'écoulement de raccordement (212) ou pour bloquer la communication entre la pluralité de trajets d'écoulement d'ajustement et la pluralité de trajets d'écoulement de raccordement (212).

9. Échangeur de chaleur selon la revendication 1, où les modules d'écoulement comprennent une pluralité de trajets d'écoulement de raccordement (212) reliés à la pluralité de parties de trajet d'écoulement de transfert (211) respectifs pour présenter des passages par lesquels le fluide est transféré vers la pluralité de parties de trajet d'écoulement de transfert (211), et
où ledit au moins un régulateur de trajet d'écoulement (300) est déplacé ou tourné pour ouvrir ou fermer au moins un des trajets de la pluralité de trajets d'écoulement de raccordement (212).

10. Échangeur de chaleur selon la revendication 9, si dépendante de la revendication 2, où une pluralité de trajets d'écoulement d'ajustement par lesquels le fluide s'écoule sont formés dans au moins un régulateur de trajet d'écoulement (300),
où la pluralité de trajets d'écoulement d'ajustement sont disposés de manière à être espacés les uns des autres dans la deuxième direction, et
où ledit au moins un régulateur de trajet d'écoulement (300) est déplacé dans la deuxième direction de sorte que la pluralité de trajets d'écoulement d'ajustement et la pluralité de trajets d'écoulement de raccordement (212) sont reliés les uns aux autres ou sont bloqués les uns par rapport aux autres selon une combinaison arbitraire.

11. Échangeur de chaleur selon la revendication 9 ou la revendication 10, si dépendante de la revendication 2, où les modules de trajet d'écoulement comprennent en outre une chambre de régulateur recevant une partie dudit au moins un régulateur de trajet d'écoulement (300) et présentant un espace où ledit au moins un régulateur de trajet d'écoulement (300) est déplaçable dans la première direction, et
où ledit au moins un régulateur de trajet d'écoulement (300) est déplacé dans la première direction pour ouvrir au moins un des trajets de la pluralité de trajets d'écoulement de raccordement (212) de sorte que le fluide s'écoule vers ledit au moins un trajet d'écoulement de raccordement (212) par la chambre de régulateur, ou ledit au moins un régulateur de trajet d'écoulement (300) est déplacé dans la première direction pour fermer la pluralité de trajets d'écoulement de raccordement (212).

12. Échangeur de chaleur selon l'une des revendications 9 à 11, comprenant en outre :
un orifice (400) prévu dans un ou plusieurs trajets de la pluralité de trajets d'écoulement de raccordement (212) pour supprimer l'instabilité d'écoulement résultant de l'ébullition du fluide,
où ledit au moins un régulateur de trajet d'écoulement (300) est déplacé ou tourné pour ouvrir et fermer un ou plusieurs trajets de la pluralité de trajets d'écoulement de raccordement (212) de sorte que le fluide s'écoule vers un trajet d'écoulement de raccordement (212) pourvu de l'orifice, ou vers un trajet d'écoulement de raccordement (212) sans l'orifice (400).

13. Échangeur de chaleur selon la revendication 12, où l'orifice (400) comprend une pluralité d'orifices (400), et où la pluralité d'orifices (400) comprend :
un premier orifice prévu dans l'un des trajets de la pluralité de trajets d'écoulement de raccordement (212) ; et
un deuxième orifice disposé dans un autre trajet de la pluralité de trajets d'écoulement de raccordement (212) et ayant un coefficient de perte de pression différent du coefficient de perte de pression du premier orifice, et
où ledit au moins un régulateur de trajet d'écoulement (300) est déplacés ou tourné de sorte que le fluide s'écoule vers le trajet d'écoulement de raccordement (212) pourvu du premier orifice parmi la pluralité de trajets d'écoulement de raccordement (212), le fluide s'écoule vers le trajet de raccordement pourvu du deuxième orifice parmi la pluralité de trajets d'écoulement de raccordement (212), ou le fluide s'écoule vers un trajet d'écoulement de raccordement (212) dépourvu du premier orifice et du deuxième orifice.
